# EUROPEAN PATENT APPLICATION

(11) **EP 3 778 810 A1**
(43) Date of publication of application: **17.02.2021**
(21) Application number: 19775472.4
(22) Date of filing: 28.03.2019
(51) Int. Cl.: C09D 183/04, B05D 5/00, B05D 7/24, C09D 5/00

(54) **UNDERCOAT LAYER-FORMING COMPOSITION, UNDERCOAT LAYER, AND COATING FILM**

(30) Priority: 28.03.2018 JP 2018063246
(71) Applicant: NITTO DENKO CORPORATION, Ibaraki-shi Osaka 567-8680 (JP)
(72) Inventor: TAKENOUCHI, Yuta, Ibaraki-shi, Osaka 567-8680 (JP); SUZUKI, Satoru, Ibaraki-shi, Osaka 567-8680 (JP); NAITO, Tomonari, Ibaraki-shi, Osaka 567-8680 (JP); IKENAGA, Akie, Ibaraki-shi, Osaka 567-8680 (JP); MURAKOSHI, Sakura, Ibaraki-shi, Osaka 567-8680 (JP)
(74) Representative: Gill Jennings & Every LLP
(86) International application number: PCT/JP2019/013873
(87) International publication number: WO 2019/189694

(57) **Abstract**

An object of the present invention is to provide a coating film that can be peeled in a sheet form, facilitates removal work and is less likely to be peeled even if used for a long period of time, and an undercoat layer-forming composition for forming an undercoat layer of the coating film. The present invention relates to an undercoat layer-forming composition for forming an undercoat layer of a coating film including the undercoat layer and an antifouling layer adhered to the undercoat layer, wherein the undercoat layer-forming composition comprises a base polymer and a silicone polymer, and a polar group-containing substituent is bonded to at least a part of the silicone polymer.

## Description

### TECHNICAL FIELD

The present invention relates to a coating film, an undercoat layer for forming the coating film, and an undercoat layer-forming composition. The coating film is used on, for example, the surface of an underwater structure such as a ship, and various exterior materials such as a roof and an exterior wall.

### BACKGROUND ART

In an underwater structure such as a ship, aquatic microorganisms such as barnacles, oysters, blue mussels, hydra, serpula, sea squirts, moss animals, sea lettuce, green laver and attached diatoms are sometimes attached to a water-contacting portion and bleed thereon. The aquatic microorganisms lead to deterioration of mechanical performance of facilities such as deterioration of thermal conductivity, and deterioration of the beauty of sightseeing facilities and ship. Particularly, in the ship, the aquatic microorganisms bring about lowering of speed and deterioration of fuel consumption by increased fluid resistance. Furthermore, aquatic microorganisms attached to a ship spread to other area, leading to disturbance of aquatic environment.

In the light of the circumstances, Patent Literature 1 discloses an antifouling paint that can prevent the attachment of marine organisms by applying the antifouling paint to the surface of an underwater structure. The antifouling paint uses less toxic composition, different from the conventional method, by using a photocatalyst. Furthermore, regarding the problem that a composition having an antifouling effect is enclosed by a binder and loses its effect, the Patent Literature uses a coating film comprising a surface side layer containing an antifouling agent and an adhesive that is provided between the layer containing an antifouling agent and the surface of a structure and adheres those to each other.

Patent Literature 2 provides an antifouling composition comprising zinc bisdimethyldithiocarbamoylethylenebisdithiocarbamate, a (meth)acrylate resin, a polyether silicone having a number average molecular weight of 500 to 20,000 and a monobasic acid

### SUMMARY OF INVENTION

### TECHNICAL PROBLEM

However, an old coating film was required to be removed in the conventional antifouling composition due to the deterioration of antifouling performance. Removal work of the old coating film was heavy labor and high cost work such that a coating film was removed by grinding.

For example, in the antifouling paint disclosed in Patent Literature 1, a coating film is removed by dissolving an adhesive using an organic solvent, and this requires considerable labor.

On the other hand, Patent Literature 2 refers to easiness of removal of a coating film, but discloses only an invention of grinding and removing the coating film. It can be said that the removal of a coating film was still heavy labor and high coat work, and the removal work of a coating film still involved difficulty.

Furthermore, the invention disclosed in Patent Literature 2 aims for prolonging a lifetime of a coating film, and the prolongation of a lifetime is achieved by relaxing the deterioration of antifouling performance. When an underwater structure is used for a long period time, adhesive force is deteriorated and a coating film is likely to be peeled. Particularly, in the case of an underwater structure moving underwater, such as a ship, a coating film receives resistance by water, and is sometimes peeled from the underwater structure.

Furthermore, Patent Literature 2 does not disclose peeling a coating film in a sheet form (sheet peeling).

Accordingly, the present invention has been made to solve the above problems and provides an undercoat layer-forming composition having excellent adhesiveness to an antifouling layer and capable of forming an undercoat layer of a coating film that is adhered to a structure such as an underwater structure and can be peeled in a sheet form, and an undercoat layer.

The antifouling layer preferably includes a silicone resin. When the antifouling layer includes a silicone resin, an interaction occurs between a polar group in a silicone polymer contained in the undercoat layer and a polar group in the silicone resin contained in the antifouling layer or an alkoxy group in the silicone polymer forms a silanol bond together with the silicone resin, thereby expressing particularly high adhesiveness.

Furthermore, the present invention provides a coating film that can be peeled in a sheet form, thereby facilitating removal work of the coating film, and is less likely to be peeled even if used for a long period of time in, for example, an underwater structure involving underwater movement or an underwater structure receiving water flow resistance, such as an underwater structure used in a place receiving rough wave.

### SOLUTION TO PROBLEM

One embodiment of the present invention is an undercoat layer-forming composition for forming an undercoat layer of a coating film including the undercoat layer and an antifouling layer adhered to the undercoat layer,
wherein the undercoat layer-forming composition comprises a base polymer and a silicone polymer, and
a polar group-containing substituent is bonded to at least a part of the silicone polymer.

In one embodiment of the present invention, the polar group-containing substituent is preferably bonded to at least a part of a side chain of the silicone polymer.

In one embodiment of the present invention, the silicone polymer is preferably a polymer represented by the following formula (1).

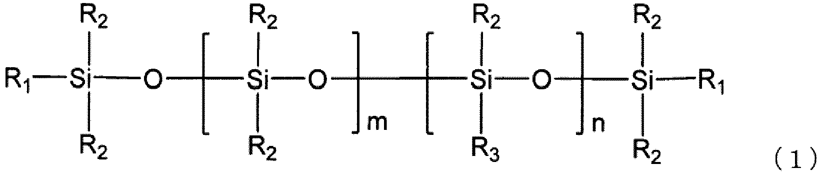

(In the formula (1), R₁ each independently represents a substituent containing a polar group or a hydrocarbon group. R₂ each independently represents a hydrocarbon group. R₃ each independently represents a substituent containing a polar group or a hydrocarbon group, and at least a part thereof is a group containing a polar group. m and n each are an integer of 0 or more, and m+n is an integer of 0 to 40.)

In one embodiment of the present invention, the R₁ preferably each independently represents an alkoxy group having 1 to 6 carbon atoms, an amino group, a carboxyl group, a silanol group or an alkyl group, the R₂ preferably each independently represents a hydrocarbon group having 1 to 10 carbon atoms, and the R₃ preferably each independently represents a substituent containing at least one substituent selected from the group consisting of an amino group, an epoxy group, a mercapto group, an alkoxy group and a phenyl group.

In one embodiment of the present invention, the silicone polymer preferably has a weight average molecular weight of 200 to 100000.

In one embodiment of the present invention, the compounding ratio of the base polymer and the silicone polymer is preferably that the amount of the silicone polymer is 0.1 to 50 parts by mass per 100 parts by mass of the base polymer.

In one embodiment of the present invention, the undercoat layer-forming composition preferably further comprises a compound containing a polar group.

In one embodiment of the present invention, the base polymer may be modified with a compound containing a polar group.

In one embodiment of the present invention, the antifouling layer preferably includes a silicone resin.

In one embodiment of the present invention, the antifouling layer further includes a hydrophilic silicone oil.

In one embodiment of the present invention, the antifouling layer further includes a hydrophobic silicone oil.

In one embodiment of the present invention, a ratio of the mass of the hydrophilic silicone oil to the mass of the hydrophobic silicone oil (mass of hydrophobic silicone oil/mass of hydrophilic silicone oil) may be 0.5 to 5.0.

One embodiment of the present invention is an undercoat layer formed by the undercoat layer-forming composition.

One embodiment of the present invention is a coating film comprising the undercoat layer and an antifouling layer.

In one embodiment of the present invention, the coating film may have a ratio of tensile break strength (N/20 mm) to adhesive force (N/20 mm) to a structure of 1.5 or more, and a degree of peeling in 1 mm square cross-cut stretching of the antifouling layer to the undercoat layer may be 0.05 or less.

### BRIEF DESCRIPTION OF DRAWINGS

[FIG. 1] FIG. 1 is a schematic cross-sectional view showing a coating film that is one embodiment of the present invention.
[FIG. 2] FIG. 2 is a schematic view explaining technical meaning of the degree of peeling in 1 mm square cross-cut stretching.
[FIG. 3] FIG. 3 is a schematic cross-sectional view explaining a test confirming adhesive force.

### DESCRIPTION OF EMBODIMENTS

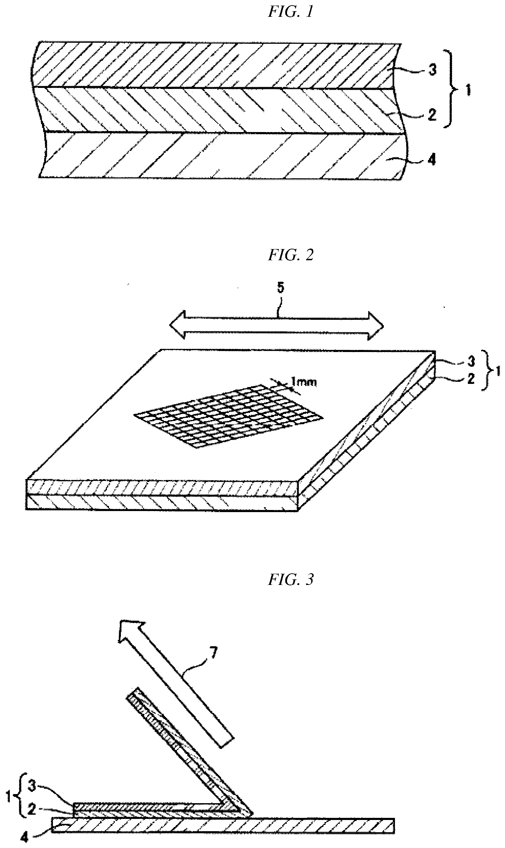

FIG. 1 is a schematic cross-sectional view of a coating film 1 applied to an underwater structure 4, that is an embodiment of the present invention. The coating film is formed as a laminate including an undercoat layer 2 and an antifouling layer 3 in the order from the underwater structure side. The coating film can be formed by applying an undercoat layer-forming composition according to an embodiment of the present invention to the underwater structure, drying the composition and then applying an antifouling layer-forming composition thereto, followed by drying.

### <Undercoat layer>

The undercoat layer according to an embodiment of the present invention can be formed by the undercoat layer-forming composition according to an embodiment of the present invention, and is preferably formed by applying the undercoat layer-forming composition to an underwater structure, followed by drying.

The undercoat layer-forming composition according to an embodiment of the present invention is an undercoat layer-forming composition for forming an undercoat layer of a coating film including the undercoat layer and an antifouling layer adhered to the undercoat layer, and the undercoat layer-forming composition contains a base polymer and a silicone polymer, wherein a substituent containing a polar group is bonded to at least a part of the silicone polymer.

### <Silicone polymer>

The undercoat layer-forming composition according to an embodiment of the present invention can form an undercoat layer having excellent adhesion to the antifouling layer and improved adhesive force to the structure by containing a silicone polymer having a substituent containing a polar group bonded to at least a part thereof. Furthermore, the undercoat layer formed by the undercoat layer-forming composition according to an embodiment of the present invention can form a coating film that is less likely to be peeled.

The silicone polymer used herein means a silicone polymer wherein two or more molecules of a silicon-containing compound are polymerized and a siloxane bond (Si-O-Si) is contained. Examples of the silicone polymer include a low molecular silicone (low molecular siloxane), a silicone oligomer and a silicone polymer.

The undercoat layer-forming composition according to an embodiment of the present invention exhibits more excellent adhesion in the case where the antifouling layer is formed by a silicone resin.

The reason for this is not clear, but the present inventors assume, for example, that a polar group contained in a substituent incorporated in the silicone polymer and a polar group of the silicone resin contained in the antifouling layer interact with each other or an alkoxy group incorporated in the terminal of the silicone polymer forms a silanol bond together with the silicone resin contained in the antifouling layer, thereby expressing strong adhesiveness.

The silicone polymer is preferably a polymer represented by the following formula (1).

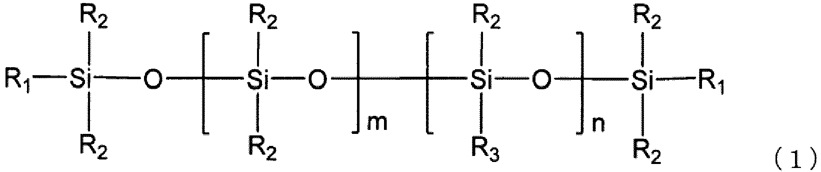

(In the formula (1), R₁ each independently represents a substituent containing a polar group or a hydrocarbon group. R₂ each independently represents a hydrocarbon group. R₃ each independently represents a substituent containing a polar group or a hydrocarbon group, and at least a part thereof is a group containing a polar group. m and n each are an integer of 0 or more, and m+n is an integer of 0 to 40.)

The substituent containing a polar group represented by R₁ may be a polar group alone and may be a substituent having a linking group bonded to a polar group.

The linking group is not particularly limited, and examples thereof include a straight chain, branched or cyclic alkylene group, an alkenylene group, an alkyleneoxy group, an aralkylene group and an arylene group. Those groups may further have a substituent.

Examples of the polar group contained in the substituent represented by R₁ include an amino group, a carboxyl group, a silanol group, an epoxy group, a mercapto group and alkoxy group. Of those, an alkoxy group, an amino group, a carboxyl group and a silanol group are preferred.

The alkoxy group is preferably an alkoxy group having 1 to 6 carbon atoms and more preferably an alkoxy group having 1 to 3 carbon atoms.

Examples of the alkoxy group having 1 to 6 carbon atoms include methoxy group, ethoxy group, n-propoxy group, i-propoxy group, n-butoxy group, i-butoxy group, sec-butoxy group, tert-butoxy group, n-pentyloxy group, neopentyloxy group, n-hexyloxy group and texyloxy group (2,3-dimethyyl-2-butyl group). Of those, methoxy group or ethoxy group is preferred, and methoxy group is more preferred.

The hydrocarbon group represented by R₁ and R₂ is preferably a hydrocarbon group having 1 to 10 carbon atoms. The hydrocarbon group may be any of a straight chain, branched or cyclic hydrocarbon group, and includes substituted or unsubstituted alkyl group, alkenyl group, alkynyl group and aryl group, each having 1 to 10 carbon atoms.

Specific examples of the alkyl group include straight chain, branched or cyclic alkyl groups such as methyl group, ethyl group, propyl group, butyl group, pentyl group, hexyl group, heptyl group, octyl group, nonyl group, decyl group, isopropyl group, isobutyl group, sec-butyl group, tert-butyl group, isopentyl group, neopentyl group, 1-methylbutyl group, isohexyl group, 2-methylhexyl group, cyclopentyl group, cyclohexyl group and 1-adamantyl group.

Specific examples of the alkenyl group include straight chain, branched or cyclic alkenyl groups such as vinyl group, 1-propenyl group, 1-butenyl group, 1-methyl-1-propenyl group, 1-cyclopentenyl group and 1-cyclohexenyl group.

Specific examples of the alkynyl group include ethynyl group, 1-propynyl group, 1-butynyl group and 1-octynyl group.

Specific examples of the aryl group include phenyl group, p-tolyl group and naphthyl group.

The hydrocarbon group having 1 to 10 carbon atoms represented by R₁ and R₂ is preferably an alkyl group having 1 to 3 carbon atoms. Methyl group or ethyl group is preferred and methyl group is more preferred.

The substituent containing a polar group or a hydrocarbon group represented by R₃ may be a polar group or a hydrocarbon group alone, and may be a substituent having a linking group bonded to a polar group or a hydrocarbon group.

The linking group is not particularly limited, and includes straight chain, branched or cyclic alkylene group, alkenylene group, alkyleneoxy group, aralkylene group and arylene group. Those groups may further have a substituent.

Examples of the polar group contained in the substituent represented by R₃ include amino group, carboxyl group, silanol group, epoxy group, mercapto group and alkoxy group. Of those, amino group, carboxyl group and silanol group are preferred.

Examples of the hydrocarbon group contained in the substituent represented by R₃ include the same hydrocarbon groups as in R₂. Of those, phenyl group is preferred.

m and n each are an integer of 0 or more, and m+n is preferably an integer of 0 to 40, more preferably an integer of 2 to 40 and still more preferably an integer of 5 to 35.

The silicone polymer is preferably a silicone oligomer.

The silicone polymer has a weight average molecular weight of preferably 200 or more, more preferably 300 or more and still more preferably 400 or more. From the standpoint of stability in a solution state, the weight average molecular weight is preferably 100000 or less, more preferably 50000 or less, still more preferably 20000 or less, still further preferably 10000 or less, particularly preferably 5000 or less and most preferably 2000 or less.

When the silicone polymer is a silicone oligomer, the silicone oligomer has a weight average molecular weight of preferably 200 or more, more preferably 300 or more and still more preferably 400 or more. On the other hand, the weight average molecular weight is preferably 10000 or less, more preferably 5000 or less and still more preferably 2000 or less, from the standpoint of stability in a solution state.

The compounding ratio of the base polymer and the silicone polymer in the undercoat layer-forming composition is that the amount of the silicone polymer is preferably 0.1 parts by mass or more, more preferably 0.3 parts by mass or more, still more preferably 0.5 parts by mass or more and most preferably 1 part by mass or more, per 100 parts by mass of the base polymer in order to enhance adhesiveness to the antifouling layer. On the other hand, the amount of the silicone polymer is preferably 50 parts by mass or less, more preferably 40 parts by mass or less, still more preferably 30 parts by mass or less, still further preferably 20 parts by mass or less, particularly preferably 15 parts by mass or less and most preferably 10 parts by mass or less, from the standpoint of adhesive force to an adherend.

### <Base polymer>

The base polymer is preferably an elastomer. For example, a rubber (thermosetting elastomer) and a thermoplastic elastomer can be used. On the other hand, a part of a thermoplastic resin such as polyvinyl chloride, showing severe deterioration due to long-term use has a possibility to cut the coating film when peeling, and is therefore not preferred.

Examples of the rubber than can be used include acryl rubber, diene rubber, butyl rubber, nitrile rubber, hydrogenated nitrile rubber, fluorine rubber, silicone rubber, ethylene-propylene rubber, chloroprene rubber, urethane rubber and epichlorohydrin rubber. Of those, acryl rubber and diene rubber are particularly preferably used. Examples of the diene rubber that can be used include natural rubber, isoprene rubber, butadiene rubber, styrene-butadiene rubber, chloroprene rubber and acrylonitrile-butadiene rubber. Of those, styrene-butadiene rubber is preferably used.

Examples of the thermoplastic elastomer than can be used include monovinyl-substituted aromatic compound-based thermoplastic elastomers such as an acrylic thermoplastic elastomer and a styrene-based thermoplastic elastomer.

Examples of the acrylic thermoplastic elastomer include a block copolymer of PMMA (polymethyl methacrylate) and acrylic acid alkyl ester. Examples of the acrylic acid alkyl ester include butyl acrylate, 2-ethylhexyl acrylate and octyl acrylate. The block copolymer can adjust peeling under constant load and tensile break strength/adhesive force to the ranges defined in the present invention by changing the proportion of PMMA as a hard segment. Specifically, when the content ratio of PMMA contained is increased, tensile break strength tends to be increased and adhesive force tends to be decreased.

Examples of the styrene-based thermoplastic elastomer that can be used include SBS (styrene-butadiene block copolymer), SIS (styrene-isoprene block copolymer), SEBS (styrene-ethylene-butylene-styrene block copolymer), SEPS (styrene-ethylene-propylene-styrene block copolymer) and SEEPS (styrene-ethylene-ethylene-propylene-styrene block copolymer).

When the elastomer is a styrene-based thermoplastic elastomer, tensile break strength and adhesive force can be adjusted by adjusting the styrene content in the elastomer. The styrene content is preferably 20 to 40 mass %, more preferably 22 to 35 mass % and still more preferably 25 to 33 mass %.

The base polymer may be modified with a compound containing a polar group for the purpose of, for example, enhancing adhesiveness to the antifouling layer. Examples of the polar group include a hydroxyl group, a carboxyl group, an alkoxysilyl group, an acid anhydride group such as a maleic anhydride group; and an amino group. Of those, a maleic anhydride group or an amino group is preferred. The content of the compound containing a polar group in the base polymer is preferably 0.1 to 20 mass %, more preferably 0.3 to 15 mass % and still more preferably 0.5 to 5 mass %.

For the same purpose, in addition to the polymer represented by the formula (1), a compound containing a polar group may be further contained in the undercoat layer-forming composition. Examples of such compound include a resin containing the polar group described above, a silane coupling agent and a silicone oil. Examples of the resin containing a polar group include an ionomer, a rosin resin and a silicone resin. The content of the compound containing a polar group to a resin component in a paint is that the total amount of the compound and the polymer represented by the formula (1) is preferably 5 to 95 mass %, more preferably 10 to 90 mass %, still more preferably 15 to 80 mass %, particularly preferably 20 to 70 mass % and most preferably 25 to 60 mass %.

The content ratio of the base polymer contained in the undercoat layer-forming composition is preferably 5 to 95 mass %, more preferably 10 to 90 mass %, still more preferably 15 to 80 mass %, particularly preferably 20 to 70 mass % and most preferably 25 to 60 mass %.

Examples of the solvent that can be used include aromatic hydrocarbons such as benzene, toluene, xylene, ethylbenzene and trimethylbenzene: aliphatic hydrocarbons such as hexane and heptane; esters such as ethyl acetate and vinyl acetate; ethers such as dioxane and diethyl ether; alcohols such as ethanol, propanol and n-butanol; ketones such as acetone, diethyl ketone and methyl isobutyl ketone; and water. The solvent may be one kind alone and may be a mixture of two or more kinds.

The content ratio of the solvent contained is preferably 5 to 95 mass %, more preferably 10 to 90 mass %, still more preferably 20 to 85 mass %, particularly preferably 30 to 80 mass % and most preferably 40 to 75 mass %.

In the case where the antifouling layer is formed by a silicone paint described hereinafter, the undercoat layer-forming composition preferably contains a styrene-based thermoplastic elastomer, 0.1 to 20 mass % of which having been modified with the compound containing a polar group, in order for enhancing adhesiveness between the antifouling layer and the undercoat layer. In this case, the styrene content can be, for example, 20 to 40 mass %.

The undercoat layer-forming composition may be an emulsion and may be an emulsion type resin composition using a polymer emulsion obtained by emulsion polymerization.

Examples of the emulsion type resin composition include an emulsion containing the elastomer described above, and a urethane emulsion containing urethane rubber or an acryl emulsion containing an acrylic thermoplastic elastomer is preferred.

An adhesive can be added to the undercoat layer-forming composition, thereby adjusting adhesive force. Exmples of the adhesive that can be used include a styrene-based tackifying resin, a terpene-based tackifying resin, a rosin-based tackifying resin, an alicyclic saturated hydrocarbon-based tackifying resin and an acrylic tackifying resin. An adhesive other than those may be mixed, depending on the property of the undercoat layer-forming composition.

The thickness of the undercoat layer may be set depending on uses and tensile break strength described hereinafter, and is not particularly limited. The thickness is, for example, 50 to 500 µm, preferably 70 to 300 µm and still more preferably 100 to 200 µm. The tensile break strength described hereinafter mainly depends on the undercoat layer. Therefore, the tensile break strength can be adjusted by changing only the thickness of the undercoat layer.

### <Antifouling layer>

The antifouling layer according to an embodiment of the present invention can be formed by applying an antifouling layer-forming composition to the undercoat layer provided on an underwater structure and then drying the composition.

Examples of the antifouling layer-forming composition that can be used include a silicone paint, a copper paint and a zinc paint. The paint that does not suppose overcoating, such as a silicone paint, is preferably used.

The silicone paint contains an organopolysiloxane. The organopolysiloxane has a curing reactive group. Therefore, the antifouling layer formed by the silicone paint contains a silicone resin that is a reaction product of the organopolysiloxane. Examples of the curing reactive group that may be used include a hydroxyl group, an alkoxy group having 1 to 8 carbon atoms, a vinyl group and a (meth)acryl group. Examples of the hydrolyzable group other than a hydroxyl group, that can be used include an alkoxy group such as methoxy group, ethoxy group or propoxy group; an alkoxyalkoxy group such as methoxyethoxy group, ethoxyethoxy group or methoxypropoxy group; an acyloxy group such as acetoxy group, octanonyloxy group or benzoyloxy group; an alkenyloxy group such as vinyloxy group, isopropenyloxy group or 1-ethyl-2-methylvivnyloxy group; a ketoxime group such as dimethyl ketoxime group, methyl ethyl ketoxime group or diethyl ketoxime group; an amino group such as dimethylamino group, diethylamino group, butylamino group or cyclohexylamino group; an aminoxy group such as dimethylaminoxy group or diethylaminoxy group; and an amide group such as N-methylacetamide group, N-ethylacetamide group or N-methylbenzamide group.

The silicone paint preferably further contains a silicone oil. Examples of the silicone oil that can be used include dimethyl silicone oil in which all groups are methyl group; methylphenyl silicone oil in which a part of methyl groups in the dimethyl silicone oil is substituted with phenyl group; an amino-modified silicone oil substituted with monoamine, diamine or amino-polyether group; an epoxy-modified silicone oil substituted with epoxy, alicyclic epoxy, epoxy-polyether or epoxy·aralkyl group; a carbinol-modified silicone oil substituted with carbinol group; a mercapto-modified silicone oil substituted with mercapto group; a carboxyl-modified silicone oil substituted with carboxyl group; a methacryl-modified silicone oil substituted with methacryl group; a polyether-modified silicone oil substituted with polyether; a long chain alkyl-modified silicone oil substituted with long chain alkyl or long chain alkyl·aralkyl group; a higher fatty acid-modified silicone oil substituted with higher fatty acid ester group; and a fluoroalkyl-modified silicone oil substituted with fluoroalkyl group. Furthermore, a methyl phenyl silicone oil, a polyether-modified silicone oil and a long chain alkyl-modified silicone oil can be used. The silicone oil may be used in one kind alone, or plural kinds of silicone oils may be used, and a hydrophobic silicone oil and a hydrophilic silicone oil may be used together.

The hydrophilic silicone oil is preferably a polyether-modified silicone oil.

The polyether-modified silicone oil is a polysiloxane having a siloxane bond in a main chain thereof, and has at least one polyoxyalkylene group as a substituent. The main chain may form a ring.

Bonding position of the polyoxyalkylene group in the polyether-modified silicone oil can be any appropriate bonding position. For example, the polyoxyalkylene group may be bonded to both ends of the main chain, the polyoxyalkylene group may be bonded to one end of the main chain, and the polyoxyalkylene group may be bonded to a side chain.

The polyether-modified silicone oil has HLB of preferably 3 to 15 and more preferably 3 to 10. When the HLB of the polyether-modified silicone oil is in the range, antifouling effect of the antifouling layer can be more sufficiently expressed, attachment of aquatic organisms such as algae can be more effectively prevented over a long period of time, and additionally appearance characteristics and mechanical characteristics of the antifouling layer can be more sufficiently expressed. The HLB is hydrophile and lipophile balance numerically showing the balance between hydrophile and lipophile of oil and is an abbreviation of "Valau of Hydrophile and Lipophile Balance". The HLB of the polyether-modified silicone oil can be controlled by, for example, the selection of chain length of a polyether polyoxyalkylene chain (group) and a dimethylsiloxane chain (group), and the selection of respective chain lengths of hydrophilic polyethylene oxide and hydrophobic (as compared with the hydrophilic polyethylene oxide) polypropylene oxide in the polyether polyoxyalkylene chain (group).

Examples of the polyether-modified silicone oil include side chain type (straight chain type) polyether-modified silicone oils such as trade names KF-6011 (HLB: 14.5), KF-6011P (HLB: 14.5), KF-6012 (HLB: 7.0), KF-6013 (HLB: 10.0), KF-6015 (HLB: 4.5), KF-6016 (HLB: 4.5), KF-6017 (HLB: 4.5), KF-6017P (HLB: 4.5), KF-6043 (HLB: 14.5), KF-6004 (HLB: 9.0), KF351A, KF352A, KF353, KF354L, KF355A, KF615A, KF945, KF-640, KF-642, KF-643, KF-644, KF-6020, KF-6204 and X22-4515, manufactured by Shin-Etsu Silicone Co., Ltd.; side chain type (branched chain type) polyether-modified silicone oils such as trade names KF-6028 (HLB: 4.0) and KF-6028P (HLB: 4.0) manufactured by Shin-Etsu Silicone Co., Ltd.; and side chain type (branched chain type, alkyl-comodified type) polyether-modified silicone oils such as trade name KF-6038 (HLB: 3.0) manufactured by Shin-Etsu Silicone Co., Ltd.

Examples of the hydrophobic silicone oil include an unreactive silicone oil having a main chain composed of a siloxane bond. The hydrophobic silicone oil may have a substituent, and the main chain may form a ring. The hydrophobic silicone oil may be a straight chain silicone oil or a modified silicone oil (excluding polyether-modified silicone oil). The substituent in the straight chain silicone oil is preferably an alkyl group and a phenyl group.

Specific examples of the hydrophobic silicone oil include a terminal hydroxyl group-containing dimethyl silicone oil in which both ends or one end of a polysiloxane are a hydroxyl group, a dimethyl silicone oil in which all of substituents bonded to Si of a polysiloxane is a methyl group, a phenyl methyl silicone oil (phenyl-modified silicone oil) in which a part of methyl groups of those dimethyl silicone oils is substituted with a phenyl group), and a long chain alkyl-modified silicone oil.

Examples of the hydrophobic silicone oil include trade names KF96L, KF96, KF69, KF99, KF50, KF54, KF410, KF412, KF414, KF415, FL, KF-6104 and KF-6100, manufactured by Shin-Etsu Silicone Co., Ltd.; and trade names BY16-846, SF8416, SH200, SH203, SH230, SF8419, FS1265, SH510, SH550, SH710, FZ-2110 and FZ-2203, manufactured by Dow Corning Toray Co., Ltd.

In the case where the hydrophobic silicone oil and the hydrophilic silicone oil are used together, the compounding ratio of the hydrophobic silicone oil and the hydrophilic silicone oil is not particularly limited. However, a ratio of the mass of the hydrophilic silicone oil to the mass of the hydrophobic silicone oil (mass of hydrophobic silicone oil/mass of hydrophilic silicone oil) is preferably 0.5 to 5.0 and more preferably 1.5 to 4.0. When the compounding ratio between the hydrophobic silicone oil and the hydrophilic silicone oil is in the above range, the antifouling effect of the antifouling layer can be more sufficiently expressed, adhesion of aquatic organisms such as algae can be more effectively prevented over a long period of time, and additionally adhesive force between the undercoat layer and an adherend can be further improved.

The content ratio of the silicone resin in the antifouling layer can be any appropriate content ratio depending on the content ratio of other component such as an antifouling agent. The content ratio can be, for example, 30 to 98 mass %, and is more preferably 35 to 90 mass % and still more preferably 40 to 80 mass %.

The content of the silicone oil to 100 parts by mass of the silicone resin is preferably 1 to 150 parts by mass and more preferably 40 to 140 parts by mass. The antifouling effect of the antifouling layer can be more sufficiently expressed by adjusting the content of the silicone oil to 100 parts by mass of the silicone resin to the above range, and additionally appearance characteristics and mechanical characteristics of the antifouling layer can be more sufficiently expressed.

The antifouling layer-forming composition may be an emulsion, and examples thereof include an emulsion containing the silicone resin. Examples of the emulsion containing a silicone resin include a side chain amine emulsion and a both-end alkyl side chain-terminated amine emulsion.

The copper paint is a paint containing a copper compound. Examples of the copper compound that can be used include copper oxide such as cuprous oxide or cupric oxide, a copper alloy such as a copper-nickel alloy, copper salts such as copper thiocyanate or copper sulfide, and an organometal compound such as copper pyrithione or copper acetate. The zinc paint can use a paint containing zinc oxide as an antifouling agent.

The antifouling layer may contain any appropriate other additive in a range that does not impair the effect of the present invention. Examples of such other additive include an ultraviolet absorber as a weather-proof agent.

The thickness of the antifouling agent is set depending on uses, and is not particularly limited. The thickness is, for example, 50 to 500 µm, preferably 70 to 300 µm and still more preferably 100 to 200 µm.

### <Tensile break strength/adhesive force>

Tensile break strength is strength showing difficulty of break of a coating film when the coating film has been pulled. When the tensile break strength is low, a coating film breaks in peeling the coating film from an adherend, and peeling becomes difficult. Furthermore, when adhesive force is high, force necessary to peel the coating film from an adherend is increased, and as a result, the coating film is likely to break. Therefore, to easily peel the coating film without breaking, a ratio of tensile break strength to adhesive force is preferably high.

The coating film is peeled after using an underwater structure for a certain period of time, for example, 5 years. Therefore, tensile break strength and adhesive force after use of an underwater structure are required to facilitate the peeling. The coating film according to an embodiment of the present invention preferably has a ratio of tensile break strength (N/20 mm) to adhesive force (N/20 mm) to the structure of 1.5 or more. The ratio of tensile break strength (N/20 mm) to adhesive force (N/20 mm) to the structure of the coating film according to the embodiment of the present invention is 1.5 or more, preferably 3.0 or more and more preferably 5.0 or more. In the antifouling layer-forming composition that forms a coating film, the undercoat layer-forming composition and a paint set including those, when a coating film including the undercoat layer having a thickness of 150 µm that is a typical thickness of a coating film and the antifouling layer having a thickness of 100 µm has been formed, a ratio of tensile break strength (N/20 mm) of the coating film to adhesive force (N/20 mm) to PMMA is 1.5 or more, preferably 3.0 or more and more preferably 5.0 or more. Furthermore, in regard to the undercoat layer-forming composition according to an embodiment of the present invention, when a coating film including the undercoat layer having a thickness of 150 µm and the antifouling layer made of a silicone resin (containing 90 parts by mass of silicone oil to 100 parts by mass of the silicone resin) and having a thickness of, for example, 100 µm has been formed, a ratio of tensile break strength (N/20 mm) to adhesive force (N/20 mm) to PMMA is 1.5 or more, preferably 3.0 or more and more preferably 5.0 or more. Therefore, the coating film formed using the undercoat layer-forming composition according to an embodiment of the present invention can be easily peeled even after use over a long period of time.

When the value of the adhesive force is too low, the coating film may be spontaneously separated. Therefore, it is preferably 3.0 or more and more preferably 4.0 or more. On the other hand, when the adhesive force is too large, excessive force is required and workability is deteriorated. Therefore, it is preferably 20 or less and more preferably 15 or less.

### <Degree of peeling in cross-cut stretching>

As shown in FIG. 2, the degree of peeling in 1 mm square cross-cut stretching of the antifouling layer to the undercoat layer is the proportion of squares separated when a laminate having a plurality of 1 mm cut squares formed on only the antifouling layer has been stretched two times on a diagonal line of the squares (direction shown by an arrow 5 in FIG.2), and shows the degree of difficulty of separation of the antifouling layer from the undercoat layer.

In the undercoat layer-forming composition, undercoat layer and coating film according to the embodiments of the present invention, the degree of peeling in 1 mm square cross-cut stretching of the antifouling layer to the undercoat layer is preferably 0.05 or less, more preferably 0.04 or less, still more preferably 0.03 or less, still further preferably 0.01 or less and most preferably 0.00.

In the antifouling layer-forming composition that forms a coating film, the undercoat layer-forming composition and a paint set including those, when a coating film including the undercoat layer having a thickness of 150 µm that is a typical thickness of a coating film and the antifouling layer having a thickness of 100 µm has been formed, the degree of peeling in 1 mm square cross-cut stretching of the coating film is preferably 0.05 or less, more preferably 0.04 or less, still more preferably 0.03 or less, still further preferably 0.01 or less and most preferably 0.00.

Furthermore, in regard to the undercoat layer-forming composition according to an embodiment of the present invention, when a coating film including the undercoat layer having a thickness of 150 µm and the antifouling layer made of a silicone resin (containing 90 parts by mass of silicone oil to 100 parts by mass of the silicone resin) and having a thickness of, for example, 100 µm has been formed, the degree of peeling in 1 mm square cross-cut stretching of the coating film is preferably 0.05 or less, more preferably 0.04 or less, still more preferably 0.03 or less, still further preferably 0.01 or less and most preferably 0.00. The degree of peeling in 1 mm square cross-cut stretching shows adhesiveness of the antifouling layer. Therefore, the coating film having small degree of peeling exhibits the effect that the antifouling layer is less likely to peel from the undercoat layer.

### <Structure>

Examples of the typical materials used in the surface of a structure include PMMA (polymethyl methacrylate resin), a gel coat (acrylic polymer/polystyrene, or the like), a coating film by an epoxy paint or a coating film by an enamel paint (acrylic polymer or the like), and aluminum. The present invention can use other materials.

The undercoat layer-forming composition and coating film according to the embodiments are used as an antifouling coating film that prevents aquatic organisms from adhering to and propagating on an underwater structure such as a ship, a buoy, harbor facilities, offshore oilfield equipment, a passage for plant power cooling water, a floating passage, a water gate, an underwater sensor, an underwater camera, an underwater light, an underwater pump, an underwater piping, underwater power generation facilities (for example, a tidal power generation equipment, an ocean current power generation equipment, a wave-activated power generation equipment and an offshore wind power generation equipment), an underwater rotating body such as a propeller and various underwater mooring equipment such as an underwater wire.

The undercoat layer-forming composition and coating film according to the embodiments described above are formed on an underwater structure, but may be formed on structures other than the underwater structure. In such a case, the same effect is exhibited. For example, the undercoat layer-forming composition and coating film may be formed on the surface of various exterior materials such as a roof and an outer wall. In such a case, adhesive force to PMMA is used as an index showing difficulty of separation from an adherend during use. The adhesive force of the coating film of the present invention to PMMA to a structure is preferably 0.5 (N/20 mm) or less, preferably 0.3 or less, more preferably 0.2 or less, still more preferably 0.1 or less and most preferably 0.0. Other properties such as a ratio of tensile break strength (N/20 mm) to adhesive force (N/20 mm) in the embodiment and the degree of peeling in 1 mm square cross-cut stretching of a layer of the antifouling layer-forming composition to a layer of the undercoat layer-forming composition are the same as in the paint forming a coating film to an underwater structure.

### Examples

Following tests were conducted to the coating film formed using each paint shown in Examples and Comparative Examples. Table 1 shows the resin components of the undercoat layer in each Example and Comparative Example and test results.

### [Example 1]

### (Preparation of undercoat layer-forming composition)

100 Parts by mass of maleic acid-modified SEBS (styrene content: 30 mass %, trade name FG1901, manufactured by Kraton Japan Polymer) as a base polymer, 3 parts by mass of a silicone oligomer (trade name KF862, manufactured by Shin-Etsu Silicone Co., Ltd.) and 400 parts by mass of xylene were mixed, and the resulting mixture was stirred at room temperature (23°C) for 12 hours. Thus, an undercoat layer-forming composition was obtained.

### (Preparation of antifouling layer-forming composition (overcoat layer-forming composition))

100 Parts by mass of a silicone resin (trade name KE445B, manufactured by Shin-Etsu Silicone Co., Ltd.), 60 parts by mass of a hydrophobic silicone oil (methyl phenyl silicone oil, trade name KF50-100Cs, manufactured by Shin-Etsu Silicone Co., Ltd.) and 20 parts by mass of a hydrophilic silicone oil (polyether-modified silicone oil, trade name KF6016, manufactured by Shin-Etsu Silicone Co., Ltd.) were mixed, and the resulting mixture was stirred at room temperature (23°C) for 5 minutes. Thus, an antifouling layer-forming composition was obtained.

### (Measuring method of adhesive force)

Using a paint set including the undercoat layer-forming composition prepared in Example 1 above and the antifouling layer-forming composition prepared above, a coating film was prepared by the following method, and adhesive force was measured. The undercoat layer-forming composition was applied to a PMMA plate (trade name DELAGLAS K, manufactured by Asahikasei Technoplus Corporation, methyl methacrylate polymer 96.6% or more) by an applicator, and dried at room temperature for 12 hours. Thus, an undercoat layer having a thickness of 150 µm was prepared. The antifouling layer-forming composition was applied to the undercoat layer thus prepared by an applicator, and dried at room temperature for 12 hours, thereby preparing an antifouling layer having a thickness of 100 µm. Thus, a coating film including the undercoat layer and the antifouling layer was prepared on the PMMA plate.

The periphery of the coating film was removed such that the coating film has a size of 20 mm × 100 mm. Force when the laminate was peeled off from the PMMA plate at a peel angle of 180° (direction shown by arrow 7 in FIG. 3) in a peel rate of 300 mm/min was measured as adhesive force (N/20 mm) using a tensile tester (AUTOGRAPH AGS-X, manufactured by Shimadzu Corporation). FIG. 3 is a schematic view explaining a confirmation experiment of adhesive force.

### (Measuring method of tensile break strength (1))

The undercoat layer-forming composition was applied to the surface of a separator (trade name MFR38, manufactured by Mitsubishi Plastics, Inc., thickness 50 µm) by an applicator, and dried at room temperature for 12 hours. Thus, an undercoat layer having a thickness of 150 µm was prepared. The antifouling layer-forming composition was applied to the undercoat layer thus prepared by an applicator, and dried at room temperature for 12 hours, thereby forming an antifouling layer having a thickness of 100 µm. Thus, a coating film including a laminate of the undercoat layer and the antifouling layer was prepared on the separator. The laminate of undercoat layer/antifouling layer obtained was cut so as to have a size of 20 mm × 60 mm, and tensile break strength (1) was evaluated using a tensile tester (apparatus name AUTOGRAPH AGS-X, manufactured by Shimadzu Corporation).

### (Measuring method of degree of cross-cut stretching)

The same operation as in the tensile break strength was conducted, and a coating film including the undercoat layer and the antifouling layer was prepared on a separator (trade name MFR 38, manufactured by Mitsubishi Plastics, Inc., thickness 38 µm). A laminate of the undercoat layer and the antifouling layer thus obtained was cut into a size of 20 mm × 60 mm, and cuts were formed on only the antifouling layer with 100 squares (1 cm square) cutter at intervals of 1 mm using a cross-cut test cutter guide (trade name SUPER CUTTER GUIDE, manufactured by Taiyu Kizai Co., Ltd.). The laminate was stretched four times on a diagonal line of the squares, and the number of squares of the antifouling layer peeled off from the undercoat layer was counted.

### (Measuring method of running water resistance)

The undercoat layer-forming composition was applied to the surface of a PMMA plate (trade name DELAGLAS K, manufactured by Asahikasei Technoplus Corporation, methyl methacrylate polymer 96.6% or more) by an applicator, and dried at room temperature for 12 hours. Thus, an undercoat layer having a thickness of 150 µm was prepared. The antifouling layer-forming composition was applied to the undercoat layer thus prepared by an applicator, and dried at room temperature for 12 hours, thereby preparing an antifouling layer having a thickness of 100 µm. Thus, a coating film including the undercoat layer and the antifouling layer was prepared on the PMMA plate. The periphery of the coating film was removed such that the coating film has a size of 20 mm × 100 mm. Running water (flow velocity 15 knots) was flown for 100 hours in a direction parallel to a long side direction of the coating film, and the time that the antifouling layer peels off from the undercoat layer was evaluated.

In Example 1, tensile break strength (1)/adhesive force was 12.2 and the degree of cross-cut stretching degree was 0.0. The coating film of Example 1 could be peeled without breakage in a peelability test. Therefore, the coating film of Example 1 is less likely to be peeled even in the use of an underwater structure and additionally exhibits the effect that the coating film can be easily peeled in a sheet form in the maintenance of a structure.

### [Example 2]

The undercoat layer-forming composition and the antifouling layer-forming composition were prepared in the same manners as in Example 1, except that the resin composition of the undercoat layer-forming composition was changed to an amine-modified hydrogenated styrene type thermoplastic elastomer (styrene content: 30 mass %, trade name TUFTEC MP10, manufactured by Asahikasei Chemicals Corporation) that differs from the resin of Example 1 in a modification method. Using those compositions, a coating film was prepared in the same manner as in Example 1, and adhesive force, tensile break strength, cross-cut stretching test and peelability of the coating film were evaluated.

In Example 2, the degree of peeling in cross-cut stretching was 0.0 as same as in Example 1. Furthermore, although a ratio of cited break strength to adhesive force was 12.5, the coating film could be peeled off from an adherend without breakage of the coating film in a peel test, and it could be confirmed that the effect of the present invention is exhibited. Furthermore, it could be confirmed that the present invention can be carried out even though changing a polar group of a compound used in modification to a substituent having an amino group.

### [Examples 3 to 20 and Comparative Examples 1 to 4]

The undercoat layer-forming compositions and the antifouling layer-forming compositions were prepared in the same manners as in Example 1, except that the compositions of the undercoat layer-forming compositions and the antifouling layer-forming compositions were changed as shown in Table 1 or Table 2. Using those compositions, coating films were prepared in the same manner as in Example 1, and adhesive force, tensile break strength (1), cross-cut stretching degree and running water resistance of the coating films were evaluated.

In Examples 3 and 4 in which the amount of the silicone used in Example 1 was changed, it could be confirmed that excellent effect is exhibited as same as in Example 1.

In Examples 5 to 20 in which the kind of the elastomer, the kind of the silicone polymer and the composition of the overcoat layer-forming composition were changed, it could be confirmed that adhesive force and running water resistance are excellent and excellent effect is exhibited as same as in Example 1, by using the undercoat layer-forming composition containing the base polymer and the silicone polymer having bonded thereto a substituent containing a polar group.

In Examples 17 to 20, the silicone polymer having polar groups at both ends was used, and therefore, the degree of peeling in cross-cut stretching was 100. However, peeling was not observed for 24 hours in the running water resistance test and it could be confirmed that the effect of the present invention is exhibited.

In Comparative Examples 1 to 4, the silicone polymer was not contained. It is understood that adhesiveness between the undercoat layer and the antifouling layer was poor, the degree of peeling in cross-cut stretching was large and the coating films are likely to be peeled upon use. It was seen in the running water resistance that the coating films were peeled within 1 hour and therefore were difficult to practically use.

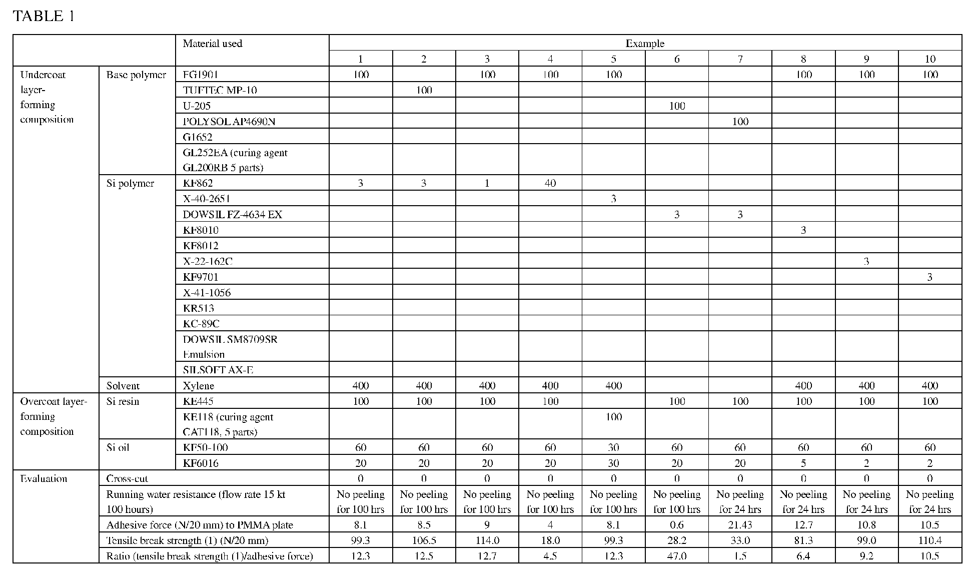

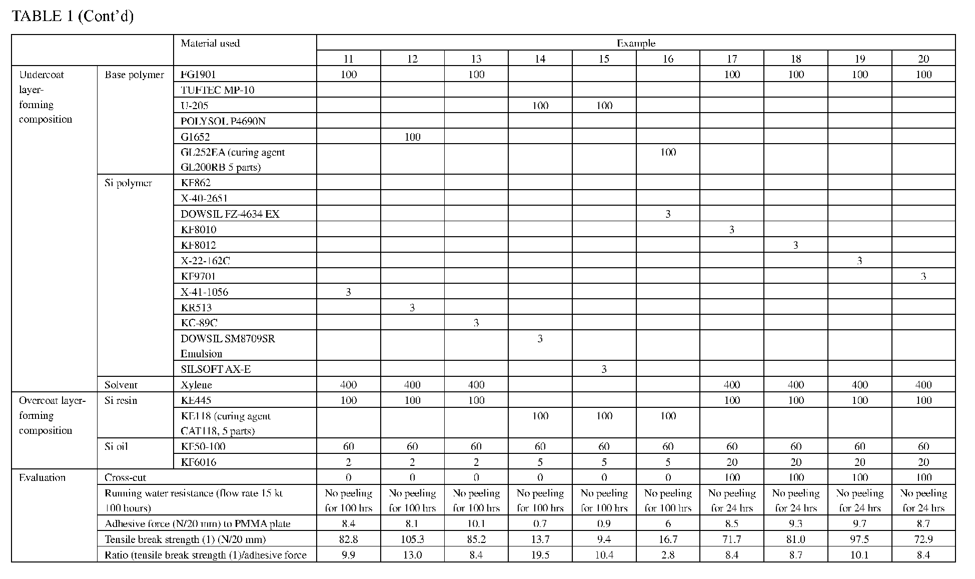

**TABLE 2**

| | | Material used | Comparative Example | | | |
|---|---|---|---|---|---|---|
| | | | 1 | 2 | 3 | 4 |
| Undercoat layer-forming composition | Base polymer | FG1901 | 100 | | | |
| | | TUFTEC MP-10 | | 100 | | |
| | | U-205 | | | | 100 |
| | | G1652 | | | 100 | |
| | Solvent | Xylene | 400 | | 400 | |
| Overcoat layer-forming composition | Si resin | KE445 | 100 | 100 | 100 | 100 |
| | Si oil | KF50-100 | 60 | 60 | 60 | 60 |
| | | KF6016 | 20 | 20 | 20 | 20 |
| Evaluation | Cross-cut | | 100 | 100 | 100 | 100 |
| | Running water resistance (flow rate 15 kt 100 hours) | | Peeled within 1 hr | Peeled within 1 hr | Peeled within 1 hr | Peeled within 1 hr |
| | Adhesive force (N/20 mm) to PMMA plate | | 9 | 8.3 | 8.3 | 3 |
| | Tensile break strength (1) (N/20 mm) | | 126.0 | 165.0 | 84.0 | 28.2 |
| | Ratio (tensile break strength (1)/adhesive force | | 14.0 | 19.9 | 10.1 | 9.4 |

### [Base polymer]

FG1901: Maleic acid-modified SEBS, manufactured by Kraton Japan Polymer
MP-10: Amine-modified hydrogenated styrene type thermoplastic elastomer, trade name TUFTEC MP10, manufactured by Asahikasei Chemicals Corporation
U-205: Urethane emulsion, manufactured by ALBERDINGK
Polysol AP4690N: Acryl emulsion, manufactured by Showa Denko K.K.
G1652: SEBS, manufactured by Kraton Japan Polymer
GL252EA (curing agent GL200RB 5 parts): Fluorine polymer, manufactured by Daikin Industries, Ltd.

### [Si polymer (silicone polymer)]

KF862: Side chain both ends type/side chain amino·both ends methoxy-modified silicone oil, manufactured by Shin-Etsu Silicone Co., Ltd. 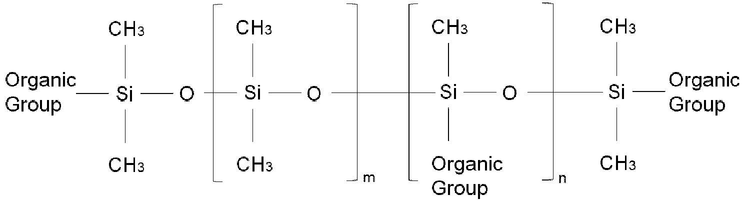
Organic group (side chain): Amino group-containing substituent
Organic group (end): Methoxy group

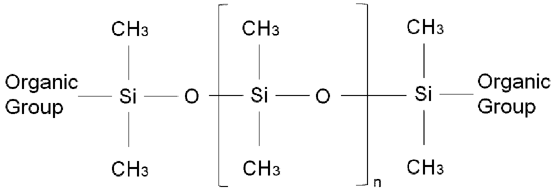

X-40-2651: Terminal side chain type/amine-modified alkoxyoligomer, manufactured by Shin-Etsu Silicone Co., Ltd.
DOWSIL FZ-4634 EX: Side chain type/side chain amine emulsion, manufactured by Dow Toray Co., Ltd.
KF8010, KF8012: Both ends type/amino-modified silicone oil, manufactured by Shin-Etsu Silicone Co., Ltd.
X-22-162C: Both ends type/carboxyl-modified silicone oil, manufactured by Shin-Etsu Silicone Co., Ltd.
KF9701: Both ends type/silanol-modified silicone oil, manufactured by Shin-Etsu Silicone Co., Ltd.
X-41-1056: Terminal side chain type/epoxy-modified alkoxyoligomer, manufactured by Shin-Etsu Chemical Co., Ltd.
KR513: Terminal side chain type/acryl-modified alkoxyoligoner, manufactured by Shin-Etsu Chemical Co., Ltd.
KC-89C: Terminal side chain type/alkoxyoligomer, manufactured by Shin-Etsu Chemical Co., Ltd.
DOWSIL SM8709SR Emulsion: Side chain type/side chain amine emulsion, manufactured by Dow Toray Co., Ltd.
SILSOFT AX-E: Terminal side chain type/both ends alkyl side chain amine emulsion, manufactured by Momentive

### [Si resin (silicone resin)]

KE445: One-part condensation silicone resin (manufactured by Shin-Etsu Chemical Co., Ltd.)
KE118 (Curing agent CAT118, 5 parts): Two-part condensation silicone resin (manufactured by Shin-Etsu Chemical Co., Ltd.)

### [Si oil (silicone oil)]

KF50-100: Phenyl-modified silicone oil (manufactured by Shin-Etsu Chemical Co., Ltd.)
KF6016: PEG-modified silicone oil (manufactured by Shin-Etsu Chemical Co., Ltd.)

### INDUSTRIAL APPLICABILITY

According to the present invention, a coating film that can be peeled in a sheet form, facilitates removal work and is less likely to be peeled even if used for a long period of time, and an undercoat layer-forming composition for forming an undercoat layer of the coating film are provided.

Although the present invention has been described in detail and by reference to the specific embodiments, it is apparent to one skilled in the art that various modifications or changes can be made without departing the spirit and scope of the present invention.

This application is based on Japanese Patent Application No. 2018-63246 filed March 28, 2018, the disclosure of which is incorporated herein by reference.

### REFERENCE SIGNS LIST

- 1:: Coating film
- 2:: Undercoat layer
- 3:: Antifouling layer
- 4:: Underwater structure
- 5:: Stretching direction
- 7:: Peeling direction

## Claims

1. An undercoat layer-forming composition for forming an undercoat layer of a coating film including the undercoat layer and an antifouling layer adhered to the undercoat layer,
wherein the undercoat layer-forming composition comprises a base polymer and a silicone polymer, and
a polar group-containing substituent is bonded to at least a part of the silicone polymer.

2. The undercoat layer-forming composition according to claim 1, wherein the polar group-containing substituent is bonded to at least a part of a side chain of the silicone polymer.

3. The undercoat layer-forming composition according to claim 1 or 2, wherein the silicone polymer is a polymer represented by the following formula (1): 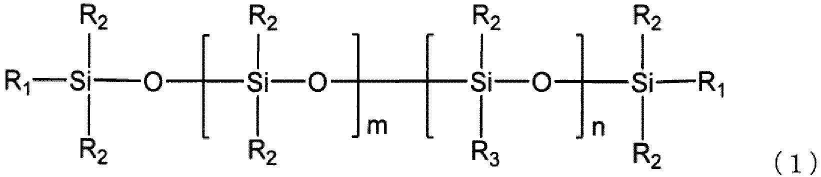 wherein R₁ each independently represents a substituent containing a polar group or a hydrocarbon group, R₂ each independently represents a hydrocarbon group, R₃ each independently represents a substituent containing a polar group or a hydrocarbon group, at least a part thereof being a group containing a polar group, m and n each are an integer of 0 or more, and m+n is an integer of 0 to 40.

4. The undercoat layer-forming composition according to claim 3, wherein the R₁ each independently represents an alkoxy group having 1 to 6 carbon atoms, an amino group, a carboxyl group, a silanol group or an alkyl group, the R₂ each independently represents a hydrocarbon group having 1 to 10 carbon atoms, and the R₃ each independently represents a substituent containing at least one substituent selected from the group consisting of an amino group, an epoxy group, a mercapto group, an alkoxy group and a phenyl group.

5. The undercoat layer-forming composition according to any one of claims 1 to 4, wherein the silicone polymer has a weight average molecular weight of 200 to 100000.

6. The undercoat layer-forming composition according to any one of claims 1 to 5, wherein a compounding ratio of the base polymer and the silicone polymer is that the amount of the silicone polymer is 0.1 to 50 parts by mass per 100 parts by mass of the base polymer.

7. The undercoat layer-forming composition according to any one of claims 1 to 6, further comprising a compound containing a polar group.

8. The undercoat layer-forming composition according to any one of claims 1 to 7, wherein the base polymer is modified with a compound containing a polar group.

9. The undercoat layer-forming composition according to any one of claims 1 to 8, wherein the antifouling layer includes a silicone resin.

10. The undercoat layer-forming composition according to claim 9, wherein the antifouling layer further includes a hydrophilic silicone oil.

11. The undercoat layer-forming composition according to claim 10, wherein the antifouling layer further includes a hydrophobic silicone oil.

12. The undercoat layer-forming composition according to claim 11, wherein a ratio of the mass of the hydrophilic silicone oil to the mass of the hydrophobic silicone oil (mass of hydrophobic silicone oil/mass of hydrophilic silicone oil) is 0.5 to 5.0.

13. An undercoat layer formed by the undercoat layer-forming composition according to any one of claims 1 to 12.

14. A coating film comprising the undercoat layer according to claim 13 and an antifouling layer.

15. The coating film according to claim 14,
wherein a ratio of tensile break strength (N/20 mm) to adhesive force (N/20 mm) to a structure is 1.5 or more, and
a degree of peeling in 1 mm square cross-cut stretching of the antifouling layer to the undercoat layer is 0.05 or less.
